# EUROPEAN PATENT APPLICATION

(11) **EP 4 467 578 A1**
(43) Date of publication of application: **27.11.2024**
(21) Application number: 23743256.2
(22) Date of filing: 17.01.2023
(51) Int. Cl.: C08F 212/34, C08F 257/02, C08K 5/00, C08L 9/00, C08L 25/08, C08L 71/12, H01B 3/44, H01B 5/14

(54) **COPOLYMER, COMPOSITION, VARNISH, AND CURED PRODUCTS OF THESE**

(30) Priority: 19.01.2022 JP 2022006424
(71) Applicant: Denka Company Limited, Tokyo 103-8338 (JP)
(72) Inventor: ARAI,Toru, Tokyo 103-8338 (JP)
(74) Representative: Müller-Boré & Partner Patentanwälte PartG mbB
(86) International application number: PCT/JP2023/001239
(87) International publication number: WO 2023/140262

(57) **Abstract**

Provided is an aromatic vinyl compound-aromatic polyene copolymer that satisfies all of the following conditions (1) to (4): (1) The copolymer has a number average molecular weight of 500 or more and less than 100000. (2) The aromatic vinyl compound monomer is an aromatic vinyl compound having 8 or more and 20 or less carbon atoms, and the content of aromatic vinyl compound monomer units is more than 70 mass%. (3) The aromatic polyene is one or more selected from polyenes having 5 or more and 20 or less carbon atoms and having a plurality of vinyl groups and/or vinylene groups in the molecule, and the content of the vinyl groups and/or the vinylene groups derived from aromatic polyene units is 2 pieces or more and less than 30 pieces per number average molecular weight. (4) One or more selected from olefin monomer units having 2 or more and 20 or less carbon atoms may be included, wherein a total amount of the aromatic vinyl compound monomer units, the aromatic polyene monomer units, and the olefin monomer units, if present, is 100 mass%.

## Description

### FIELD OF THE INVENTION

The present invention relates to a copolymer, a composition, a varnish, and cured product of these.

### BACKGROUND OF THE INVENTION

Along with the shift of communication frequency to the gigahertz or higher frequency bands, a need for multilayer substrates made of CCL or FCCL including an insulating material with low dielectric properties has increased. Although fluorine-based resins such as perfluoroethylene have excellent low dielectric constant, low dielectric loss, and excellent heat resistance, application to multi-layer substrates is difficult due to difficulty in forming processability and film formability, and problem in adhesion to a copper foil of wiring. On the other hand, although substrates and insulating materials made of post-curing resins such as epoxy resins, unsaturated polyester resins, polyimide resins, and phenolic resins have been widely used due to heat resistance and ease of handling, improvement is desired as an insulating material for high frequencies due to having a relatively high dielectric constant and dielectric loss (Patent Literature 1).

Therefore, attention has been focused on hydrocarbon-based resins that inherently have low dielectric properties. In order to make a curable resin from a hydrocarbon-based resin, which is inherently a thermoplastic resin, it is necessary to introduce a functional group. However, in general, a radical or a functional group reacting to heat has a polarity, so that low dielectric properties deteriorate. In introduction of a functional group composed only of a hydrocarbon such as aromatic vinyl group, an intermolecular reaction between expensive hydrocarbon-based monomers is used in many cases (Patent Literature 2), which is not economical in many cases. In Patent Literature 3, a cured product made of an ethylene-olefin (aromatic vinyl compound)-aromatic polyene copolymer having a specific composition and blending obtained with use of a specific coordination polymerization catalyst, i.e., a non-polar vinyl compound copolymer, is shown. In the technique, only one of the two vinyl groups of the aromatic polyene (divinylbenzene) is selectively copolymerized and the remaining vinyl group is preserved, so that a crosslinkable hydrocarbon-based copolymerized macromonomer having an aromatic vinyl functional group is easily obtained. A cured product obtained from a similar composition including an olefin-aromatic vinyl compound-aromatic polyene copolymer and auxiliary raw materials has a low dielectric constant and a low dielectric loss tangent (Patent Literatures 4 and 5). However, the olefin-aromatic vinyl compound-aromatic polyene copolymer specifically described therein is relatively soft, so that in order to be hardened, a large amount of other hard auxiliary raw materials or inorganic fillers are required to be blended.

Since the known hard crosslinkable raw materials have insufficiently low dielectric properties, there is a problem that the low dielectric properties of a cured product deteriorate in the case of blending a large amount of the materials. With blending a relatively large amount of inorganic filler, the dielectric constant of the resulting cured product increases because inorganic fillers generally have a high dielectric constant. Further, although a low-dielectric and curable aromatic vinyl compound-aromatic polyene copolymer obtained by cationic polymerization is known (Patent Literature 6), the copolymer according to the conventional art has a dendritic (tree-like) structure, so that there exist many polymer terminal structures. Due to the terminal structure peculiar to cationic polymerization, the molecular design for improving heat resistance and durability is complicated.

### PRIOR ART

### Patent Literature

[Patent Literature 1] Japanese Patent Laid-Open No. 6-192392
[Patent Literature 2] Japanese Patent Laid-Open No. 2004-087639
[Patent Literature 3] Japanese Patent Laid-Open No. 2007-217706
[Patent Literature 4] International Publication No. WO 2021/112087
[Patent Literature 5] International Publication No. WO 2021/112088
[Patent Literature 6] International Publication No. WO 2018/181842

### SUMMARY OF THE INVENTION

### TECHNICAL PROBLEM

Although the olefin-aromatic vinyl compound-aromatic polyene copolymers described in the published patent literature are relatively soft and exhibit good solubility in solvents such as toluene, ethylbenzene, and limonene, due to insufficient solubility in solvents such as methyl ethyl ketone (MEK) that are usually used for other auxiliary raw materials, there exists a problem that making a varnish containing such auxiliary raw materials is difficult.

### SOLUTION TO PROBLEM

In order to solve the problems that the conventional art has been unable to solve, the present invention provides an aromatic vinyl compound-aromatic polyene copolymer from which a harder cured product may be produced, having high solubility in solvents. Also provided is a harder cured product containing an aromatic vinyl compound-aromatic polyene copolymer.

That is, the present invention may provide the following aspects.

### Aspect 1

An aromatic vinyl compound-aromatic polyene copolymer that satisfies all of the following conditions (1) to (4):
(1) The copolymer has a number average molecular weight of 500 or more and less than 100000;
(2) The aromatic vinyl compound monomer is an aromatic vinyl compound having 8 or more and 20 or less carbon atoms, and the content of the aromatic vinyl compound monomer unit is more than 70 mass%;
(3) The aromatic polyene is one or more selected from polyenes having 5 to 20 carbon atoms and having a plurality of vinyl groups and/or vinylene groups in the molecule, and the content of the vinyl groups and/or the vinylene groups derived from aromatic polyene units is 2 pieces or more and less than 30 pieces per number average molecular weight; and
(4) One or more selected from olefin monomer units having 2 or more and 20 or less carbon atoms may be included, wherein a total amount of the aromatic vinyl compound monomer units, the aromatic polyene monomer units, and the olefin monomer units, if present, is 100 mass%.

### Aspect 2

The aromatic vinyl compound-aromatic polyene copolymer according to aspect 1, wherein the content of the olefin monomer units is 0 mass% or more and less than 30 mass% relative to 100 mass% in total of the aromatic vinyl compound monomer units, the aromatic polyene monomer units, and the olefin monomer units, if present.

### Aspect 3

The aromatic vinyl compound-aromatic polyene copolymer according to aspect 2, not comprising an olefin monomer unit.

### Aspect 4

A composition comprising the aromatic vinyl compound-aromatic polyene copolymer according to any one of aspects 1 to 3, and one or more selected from the following (a) to (d):
(a) curing agent;
(b) one or more resins selected from hydrocarbon-based elastomers, polyphenylene ether-based resins, and aromatic polyene-based resins; and
(c) monomer.
(d) another olefin-aromatic vinyl compound-aromatic polyene copolymer that satisfies all of the following conditions (i) to (iv):
   (i) The copolymer has a number average molecular weight of 500 or more and less than 100000;
   (ii) The aromatic vinyl compound monomer is an aromatic vinyl compound having 8 or more and 20 or less carbon atoms, and the content of aromatic vinyl compound monomer units is 70 mass% or less;
   (iii) The aromatic polyene is one or more selected from polyenes having a plurality of vinyl groups and/or vinylene groups in the molecule and having 5 or more and 20 or less carbon atoms, and the content of the vinyl groups and/or the vinylene groups derived from aromatic polyene units is 1.5 pieces or more and less than 20 pieces per number average molecular weight and
   (iv) The olefin is one or more selected from olefins having 2 or more and 20 or less carbon atoms, and the content of olefin monomer units is 30 mass% or more, wherein a total amount of the olefin monomer units, the aromatic vinyl compound monomer units, and the aromatic polyene monomer units is 100 mass%.

### Aspect 5

A varnish, comprising:
the copolymer according to any one of aspects 1 to 3 or the composition according to aspect 4; and
a solvent (h).

### Aspect 6

The varnish according to aspect 5, wherein the solvent is MEK (methyl ethyl ketone).

### Aspect 7

A cured product of the aromatic vinyl compound-aromatic polyene copolymer according to any one of aspects 1 to 3.

### Aspect 8

A cured product of the composition according to aspect 4.

### Aspect 9

A cured product of the varnish according to aspect 5 or 6.

### Aspect 10

The cured product according to any one of aspects 7 to 9, being an electrical insulating material.

### Aspect 11

A CCL substrate, an FCCL substrate, an interlayer insulating material, a bonding sheet, or a coverlay comprising the cured product according to any one of aspects 7 to 9.

### ADVANTAGEOUS EFFECT OF INVENTION

From the aromatic vinyl compound-aromatic polyene copolymer in the present embodiment, the composition including the same, or the cured product or varnish of the same, a low dielectric material of which cured product is hard and has high dissolubility in solvents may be obtained.

### DETAILED DESCRIPTION OF THE INVENTION

The composition according to the present invention is described in more detail as follows. In the present specification, the term sheet includes the concept of film. Further, the term film described in the present specification includes the concept of sheet. The term composition in the present specification conceptionally includes a varnish. That is, a composition particularly in a liquid state is described as varnish. In the present specification, the term interlayer insulating material includes the concept of a bonding sheet or an interlayer adhesive.

The numerical ranges in the present specification include lower and upper limits thereof unless otherwise specified.

### <Aromatic vinyl compound-aromatic polyene copolymer>

The aromatic vinyl compound-aromatic polyene copolymer of the present invention is an aromatic vinyl compound-aromatic polyene copolymer that satisfies all of the following conditions (1) to (4).
(1) The copolymer has a number average molecular weight of 500 or more and less than 100000.
(2) The aromatic vinyl compound monomer is an aromatic vinyl compound having 8 or more and 20 or less carbon atoms, and the content of aromatic vinyl compound monomer units is more than 70 mass%. The content is preferably 71 mass% or more, more preferably 80 mass% or more.
(3) The aromatic polyene is one or more selected from polyenes having 5 or more and 20 or less carbon atoms and having a plurality of vinyl groups and/or vinylene groups in the molecule, and the content of the vinyl groups and/or the vinylene groups derived from aromatic polyene units is 2 pieces or more and less than 30 pieces, preferably 3 pieces or more and less than 30 pieces per number average molecular weight.
(4) One or more selected from olefin monomer units having 2 or more and 20 or less carbon atoms may be included, wherein a total amount of the aromatic vinyl compound monomer units, the aromatic polyene monomer units, and the olefin monomer units, if present, is 100 mass%.

The olefin monomer that may be included is one or more selected from α-olefins having 2 or more and 20 or less carbon atoms and cyclic olefins having 5 or more and 20 or less carbon atoms, which is a compound containing substantially no oxygen, no nitrogen and no halogen, composed of carbon and hydrogen. Examples of the α-olefins having 2 to 20 carbon atoms include ethylene, propylene, 1-butene, 1-hexene, 1-octene, 1-decane, 1-dodecane, 4-methyl-1-pentene, and 3,5,5-trimethyl-1-hexene. Examples of the cyclic olefins having 5 to 20 carbon atoms include norbornene and cyclopentene. The olefin that may be preferably used is a combination of ethylene with an α-olefin other than ethylene or a cyclic olefin, or ethylene alone.

The aromatic vinyl compound monomer is an aromatic vinyl compound having 8 to 20 carbon atoms, and examples thereof include styrene, paramethylstyrene, ethylstyrene (ethyl vinylbenzene) paraisobutylstyrene, various vinylnaphthalenes, and various vinylanthracenes.

The aromatic polyene monomer is a polyene having 5 or more and 20 or less carbon atoms with a plurality of vinyl groups and/or vinylene groups in the molecule, which is preferably a polyene having 5 or more and 20 or less carbon atoms with a plurality of vinyl groups in the molecule, and more preferably a compound having an aromatic vinyl structure such as various divinylbenzenes including ortho-, meta-, or para-divinylbenzene or a mixture thereof, divinylnaphthalene, divinylanthracene, p-2-propenylstyrene, and p-3-butenylstyrene, containing substantially no oxygen, no nitrogen and no halogen, composed of carbon and hydrogen. Alternatively, a bifunctional aromatic vinyl compound such as 1 ,2-bis(vinylphenyl)ethane (abbreviation: BVPE) described in Japanese Patent Laid-Open No. 2004-087639 may be used. Among these, ortho-, meta-, and para-divinylbenzenes, or mixtures thereof, are preferably used, mixtures of meta-divinylbenzene and para-divinylbenzenes are most preferably used. In the present specification, such a divinylbenzene is referred to as divinylbenzenes. Use of divinylbenzenes as the aromatic polyene is preferred, because high curing efficiency and easy curing can be achieved in curing treatment.

Each monomer of the olefins, aromatic vinyl compounds, and aromatic polyenes may also include other olefins containing polar groups such as oxygen atoms and nitrogen atoms, aromatic vinyl compounds containing oxygen atoms, nitrogen atoms, etc., or aromatic polyenes containing oxygen atoms, nitrogen atoms, etc., though the total mass of the monomers containing the polar groups is preferably 10 mass% or less, more preferably 3 mass% or less of the total mass of the resin composition. Most preferably, none of monomers containing the polar group is contained. With a content controlled to 10 mass% or less, the dielectric properties (low dielectric constant/low dielectric loss) of a cured product obtained by curing the resin composition may be improved.

The aromatic vinyl compound-aromatic polyene copolymer may preferably further satisfy the following condition (5):
(5) The content of olefin monomer units is 1 mass% or more, wherein a total amount of the olefin monomer units, the aromatic vinyl compound monomer units, and the aromatic polyene monomer units is 100 mass%.

The copolymer has the number average molecular weight (Mn) of 500 or more and less than 100000. In the present invention, the number average molecular weight of 500 or more and less than 100000 means that the molecular weight in terms of standard polystyrene obtained by the GPC (gel permeation chromatography) method falls within that range.

The number average molecular weight of the copolymer may be preferably 1000 or more and 80000 or less, more preferably 1000 or more and 50000 or less, and still more preferably 1000 or more and 40000 or less.

When the total amount of the aromatic vinyl compound monomer unit, the aromatic polyene monomer unit, and the olefin monomer unit present as necessary, is 100 mass%, the content of the aromatic vinyl compound monomer unit contained in the present copolymer is more than 70 mass%, preferably 71 mass% or more, and more preferably 80 mass% or more. With a content of the aromatic vinyl compound monomer unit of more than 70 mass%, the finally resulting cured product of the aromatic vinyl compound-aromatic polyene copolymer alone may have a tensile modulus of 1000 MPa or more at 25°C, and the cured product of the composition mainly composed of the aromatic vinyl compound-aromatic polyene copolymer may easily have a tensile modulus of 100 MPa or more at 25°C. Furthermore, the aromatic vinyl compound-aromatic polyene copolymer has a high solubility in solvents such as methyl ethyl ketone (MEK), so that, for example, a varnish with use of methyl ethyl ketone as a solvent may be easily produced.

Also, the content of the aromatic vinyl compound monomer unit contained in the copolymer may be 98 mass% or less, 95 mass% or less, 92 mass% or less, or 90 mass% or less relative to the criteria. With a content of the aromatic vinyl compound monomer unit of 98 mass% or less, the hardness of the cured product is easily adjusted to an appropriate level.

In the copolymer, the content of vinyl groups and/or vinylene groups derived from aromatic polyene units, preferably the content of vinyl groups, is 2 pieces or more and less than 30 pieces, preferably 3 pieces or more and less than 30 pieces, per number average molecular weight. With a content of the vinyl group and/or vinylene group of less than 2 pieces, the cross-linking efficiency is low, so that a cured product with a sufficient cross-linking density is hardly obtained. The content of vinyl groups derived from aromatic polyene units (divinylbenzene units) per number average molecular weight in the copolymer may be determined by comparing the molecular weight (Mn) in terms of standard polystyrene obtained by the GPC (gel permeation chromatography) method known to those skilled in the art and the content of vinyl groups derived from the aromatic polyene units obtained by ¹H-NMR measurement. As an example, in the case where the content of vinyl groups derived from aromatic polyene units (divinylbenzene units) in the copolymer is 0.88 mass% based on comparison of the intensity of each peak area obtained by ¹H-NMR measurement, and the number average molecular weight (Mn) in terms of standard polystyrene obtained by the GPC measurement is 38300, the molecular weight of the vinyl group derived from the aromatic polyene units in the number average molecular weight is the product thereof or 336, which is divided by the formula weight of the vinyl group of 27 to obtain 12.5. In other words, the content of vinyl groups derived from the aromatic polyene units per number average molecular weight in the copolymer is determined to be 12.5. The assignment of peaks obtained in ¹H-NMR measurements of the copolymer is known from the literature. A method for determining the composition of a copolymer by comparing peak areas obtained by ¹H-NMR measurement is also known. Furthermore, the accuracy of the composition may be improved by adding the data of the peak areas of the ¹³C-NMR spectrum and ratios thereof measured in a known quantitative mode to the ¹H-NMR measurement method. Furthermore, the composition may also be obtained from the data of the peak areas in the ¹³C-NMR spectrum measured in a known quantitative mode and the ratios thereof. In the specification, the content of divinylbenzene units in the copolymer is determined from the peak intensity of vinyl groups derived from divinylbenzene units (by ¹H-NMR measurement). In other words, from the content of vinyl groups derived from divinylbenzene units, the content of divinylbenzene units is determined on the assumption that the one vinyl group is derived from one divinylbenzene unit in the copolymer.

In the copolymer, the content of the olefin monomer unit may be preferably 0 mass% or more or 1 mass% or more, more preferably 0 mass% or more and less than 30 mass%, or 1 mass% or more and less than 30 mass%, and still more preferably 1 mass% or more and 20 mass% or less. The total amount of the olefin monomer units, the aromatic vinyl compound monomer units, and the aromatic polyene monomer units is 100 mass%. With a content of the olefin monomer units of 1 mass% or more, the finally resulting cured product has improved toughness (elongation) and impact resistance, so that cracks during curing and cracks during a heat cycle test of the cured product are unlikely to occur. In particular, from the viewpoint of further improving the toughness (elongation) and impact resistance of the cured product, the content of the olefin monomer unit is preferably more than 5 mass% and less than 30 mass%. In another embodiment, the copolymer may contain no olefin monomer unit.

### <Method for producing aromatic vinyl compound-aromatic polyene copolymer>

The aromatic vinyl compound-aromatic polyene copolymer of the present invention may be produced by copolymerizing monomers of an aromatic vinyl compound, an aromatic polyene, and an optionally used olefin through coordination polymerization. For example, it is preferable to use a single-site coordination polymerization catalyst composed of a transition metal compound and a cocatalyst described in Japanese Patent Laid-Open No. 2009-161743, Japanese Patent Laid-Open No. 2010-280771, and International Publication No. WO 00/037517, so that an aromatic vinyl compound-aromatic polyene copolymer may be efficiently produced.

The chemical structure of the copolymer obtained with use of a coordination polymerization catalyst composed of a combination of a transition metal compound and a cocatalyst is characterized by not including a specific structure. That is, the copolymer obtained by the cationic polymerization method according to the conventional art has, for example, a polymer terminal structure containing an alicyclic ring as described in International Publication No. WO 2018/181842, while the copolymer according to an embodiment of the present invention has no such a structure, which is a notable difference. Due to the difference, in the present invention, an effect of facilitating molecular design may be obtained.

The polymer terminal structure included in the aromatic vinyl compound-aromatic polyene copolymer of the present invention may be clarified qualitatively or quantitatively by known methods using ¹H-NMR and ¹³C-NMR. In the aromatic vinyl compound-aromatic polyene copolymer of the present invention, the styrene-divinylbenzene copolymer composed of styrene as a general aromatic vinyl compound and divinylbenzene as the aromatic polyene includes a polymer terminal structure represented by one of the following E-1 to E-6, or any optional combination thereof. Alternatively, in the aromatic vinyl compound-aromatic polyene copolymer of the present invention, the ethylene-styrene-divinylbenzene copolymer composed of styrene as a general aromatic vinyl compound, divinylbenzene as an aromatic polyene, and ethylene as an olefin as another component includes a polymer terminal structure represented by one of the following chemical formulas E-1 to E-6, or any optional combination thereof.

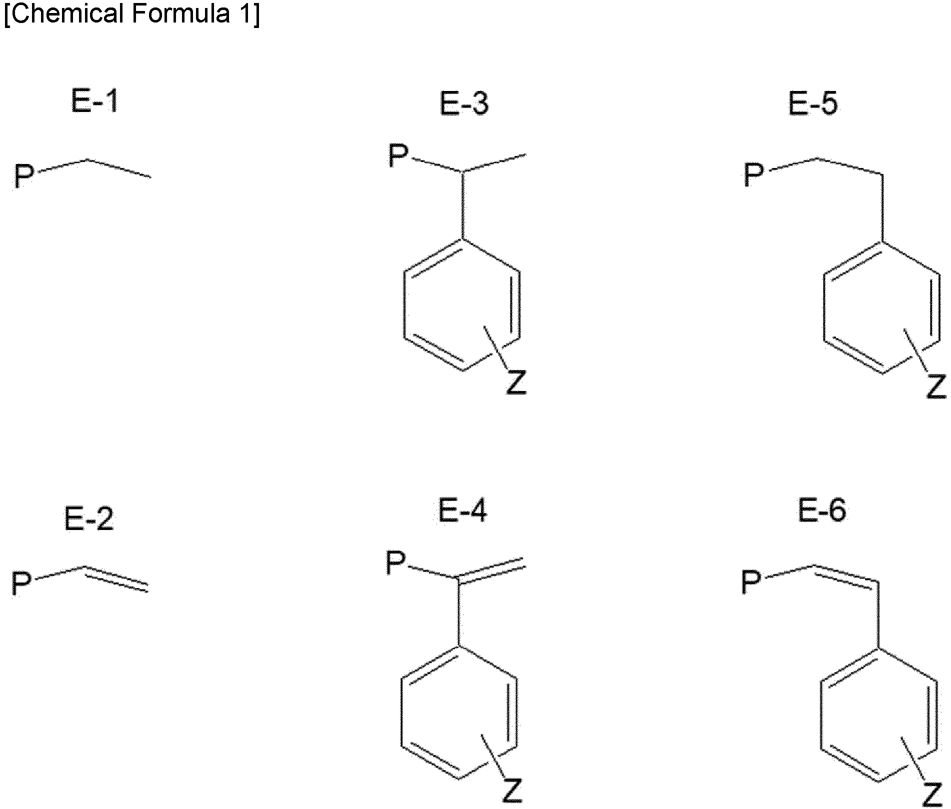

In the formulas, P represents the polymer structure residue of the aromatic vinyl compound-aromatic polyene copolymer, and Z represents hydrogen, a vinyl group, or a vinylene group.

About half of the polymer terminal structures include polymerization initiation terminals generally composed of mainly E-1 and E-3, and substantially most of them are E-1 and E-3. In addition, E-5 may also be further included in some cases. These structures are terminals having a saturated structure, and therefore the aromatic vinyl compound-aromatic polyene copolymer of the present invention essentially has high durability such as heat resistance. The proportion of the structures of the polymerization initiation terminal changes depending on factors such as whether the first monomer insertion occurs relative to a metal-hydrogen bond, whether the first monomer insertion occurs relative to a metal-alkyl group structure, whether the first monomer insertion is caused by ethylene, styrene, or divinylbenzene, and in the case where the first monomer is styrene or divinylbenzene, whether the insertion is a 2,1-insertion or a 1 ,2-insertion.

The structure of the chain transfer terminal (polymerization termination terminal) of the polymer growing chain of the polymer terminal structure is generally composed of mainly E-2 and E-6, and the remaining E-5, E-4, E-1 and E-3 are also included. The proportions thereof in the structure of the chain transfer terminal change depending on whether the chain transfer occurs by hydrogen abstraction at the beta position, by chain transfer to another coordinated monomer, by chain transfer to an alkyl aluminum as cocatalyst component, or by chain transfer to a chain transfer agent such as hydrogen. That is, the polymer terminal structure of the aromatic vinyl compound-aromatic polyene copolymer which may contain an olefin according to the present invention has many saturated-type E-1, E-3, and E-5, with small proportions of unsaturated-type E-4 and E-6. Also, in the case of using an olefin other than ethylene, an aromatic vinyl compound other than styrene, or an aromatic polyene other than divinylbenzene, each unit of ethylene, styrene, and divinylbenzene in the terminal structures of E-1 to E-6 is replaced with a different monomer in the structure.

In any case, the polymer terminal structure of the aromatic vinyl compound-aromatic polyene copolymer which may contain an olefin of the present invention is composed of one or more of the structures E-1 to E-6, substantially not including other structures. Since the aromatic vinyl compound-aromatic polyene copolymer which may contain an olefin according to the present invention is obtained by specific coordination polymerization, the copolymer has high linearity with a relatively low degree of polymer chain branching. Accordingly, the proportion itself of inclusion of the polymer terminal structure is relatively low, with a further lower proportion of inclusion of an unsaturation-type terminal structure due to the reason described above.

On the other hand, a terminal structure containing an alicyclic ring formed by a chain transfer such as an electrophilic substitution reaction of a carbocation at a polymer growth terminal to an aromatic ring of an aromatic monomer described in International Publication No. WO 2018/181842 as an example of a polymer obtained by cationic polymerization, which is a conventional art, is not included in the copolymer according to the present invention. On the other hand, the aromatic vinyl compound-aromatic polyene copolymer described in International Publication WO 2018/181842 contains a very large number of terminal structures per polymer molecule due to the dendritic and multibranched structure thereof, and the terminal structures described are mostly unsaturated structures of vinyl groups and vinylene groups in various structures due to cationic polymerization. Accordingly, there exists a problem in heat resistance stability. In particular, since a relatively large number of vinylene groups included therein remain in the cured product even after curing reaction, there exists a problem of deteriorating heat resistance stability after curing. The presence of a large amount of unsaturated groups such as vinylene groups in the cured product causes bonding to or a reaction with oxygen in the air, resulting in an unpreferred increase in the dielectric constant and dielectric loss tangent of the cured product.

In the copolymer, examples of the aromatic vinyl compound-aromatic polyene copolymer (which may contain an olefin) include a styrene-divinyl benzene copolymer, an ethylene-styrene-divinylbenzene copolymer, an ethylene-propylene-styrene-divinylbenzene copolymer, an ethylene-1-hexene-styrene-divinylbenzene copolymer, and an ethylene-1-octene-styrene-divinylbenzene copolymer.

The composition of the present invention may further contain, in addition to the copolymer, one or more selected from (a) a curing agent, (b) one or more resins selected from hydrocarbon elastomers, polyphenylene ether resins, and aromatic polyene resins, (c) a monomer, and (d) another olefin-aromatic vinyl compound-aromatic polyene copolymer that satisfies all of the following conditions (i) to (iv).
(i) The copolymer has a number average molecular weight of 500 or more and less than 100000.
(ii) The aromatic vinyl compound monomer is an aromatic vinyl compound having 8 or more and 20 or less carbon atoms, and the content of aromatic vinyl compound monomer units is 70 mass% or less.
(iii) The aromatic polyene is one or more selected from polyenes having 5 or more and 20 or less carbon atoms and having a plurality of vinyl groups and/or vinylene groups in the molecule, and the content of the vinyl groups and/or the vinylene groups derived from aromatic polyene units is 1.5 pieces or more and less than 20 pieces per number average molecular weight.
(iv) The olefin is one or more selected from olefins having 2 or more and 20 or less carbon atoms, and the content of olefin monomer units is 30 mass% or more, wherein a total amount of the olefin monomer units, the aromatic vinyl compound monomer units, and the aromatic polyene monomer units is 100 mass%.

The other olefin-aromatic vinyl compound-aromatic polyene copolymer as optional additional component described above may have the same characteristics as the present copolymer, except for the conditions on the content of aromatic vinyl compound monomer units.

### <(a) Curing agent>

As the curing agent that may be used in the composition of the present invention, known curing agents that may be used for polymerization or curing of conventional aromatic polyenes and aromatic vinyl compounds. Examples of such a curing agent include a radical polymerization initiator (radical generator), a cationic polymerization initiator, and an anionic polymerization initiator, and preferably a radical polymerization initiator may be used. An organic peroxide-based (peroxide) or azo-based polymerization initiator is more preferred, and may be freely selected according to the application and conditions. A catalog listing organic peroxides may be downloaded from an NOF website, for example, https://www.nof.co.jp/business/chemical/chemical-product01. The organic peroxides are also described in the catalogs of FUJIFILM Wako Pure Chemical Corporation and Tokyo Chemical Industry Co., Ltd. The curing agent for use in the present invention is available from these companies. Alternatively, a known photopolymerization initiator with use of light, ultraviolet rays, or radiation may be used as the curing agent. Examples of the photopolymerization initiator include a photoradical polymerization initiator, a photocationic polymerization initiator, and a photoanionic polymerization initiator. Such a photoinitiator is available, for example, from Tokyo Chemical Industry Co., Ltd. Furthermore, curing by direct radiation or electron beams is also possible. Crosslinking and curing may also be performed by thermopolymerization of raw materials contained without containing a curing agent.

The amount of the curing agent used is not particularly limited, but typically preferably 0.01 to 10 parts by mass relative to 100 parts by mass of the resin composition. It is preferable that a curing agent and a solvent be excluded from the resin composition. In the case of using a curing agent such as a peroxide-based (peroxide) or azo-based polymerization initiator, the curing treatment is performed at an appropriate temperature and time in consideration of the half-life. The conditions in this case may be freely selected according to the curing agent, and is generally a temperature range of about 50°C to 200°C is suitable.

In the composition or varnish according to an embodiment of the present invention, the total content of component (b), that is, "one or more resins selected from hydrocarbon-based elastomers, polyphenylene ether-based resins, and aromatic polyene-based resins", and component (d), that is "another olefin-aromatic vinyl compound-aromatic polyene copolymer" may be preferably in the range of 1 to 200 parts by mass relative to 100 parts by mass of the copolymer. Addition of the component (b) or component (d) has the effect of improving the mechanical properties of a cured product obtained from the varnish required for various purposes of use.

### <Hydrocarbon-based elastomer>

The amount of the hydrocarbon-based elastomer used in the composition according to an embodiment of the present invention is preferably 1 to 200 parts by mass, more preferably 1 to 100 parts by mass, and most preferably 1 to 50 parts by mass, relative to 100 parts by mass of the copolymer (that is, excluding the other olefin-aromatic vinyl compound-aromatic polyene copolymer as optional additional component). The hydrocarbon-based elastomer that may be suitably used in the composition of the present invention has a number average molecular weight of preferably 100 or more and 100000 or less, more preferably 500 or more and 100000 or less, and still more preferably 1000 or more and 4500 or less. The hydrocarbon-based elastomers that may be suitably used in the composition of the present invention preferably includes one or more elastomers selected from an ethylene-based or propylene-based elastomer, a conjugated diene-based polymer, an aromatic vinyl compound-conjugated diene-based block copolymer or random copolymer, and a hydride (hydrogenated product) thereof. Examples of the ethylene-based elastomer include an ethylene-α-olefin copolymer such as an ethylene-octene copolymer and an ethylene-1-hexene copolymer, EPR, and EPDM. Examples of the propylene-based elastomer include an atactic polypropylene, a polypropylene having low stereoregularity, and a propylene-α-olefin copolymer such as propylene-1-butene copolymer. The hydrocarbon-based elastomers may be modified through introduction of a functional group by reaction with a compound such as maleic anhydride, or the like.

Examples of the conjugated diene polymer include polybutadiene and 1,2-polybutadiene. Examples of the aromatic vinyl compound-conjugated diene-based block copolymer or random copolymer and a hydride (hydrogenated product) thereof include SBS, SIS, SEBS, SEPS, SEEPS and SEEBS. 1,2-Polybutadiene that may be suitably used is available, for example, from NIPPON SODA CO., LTD., as liquid polybutadiene under product names: Product Names B-1000, 2000, and 3000. Examples of the copolymer containing a 1,2-polybutadiene structure that may be suitably used include "Ricon 100" manufactured by TOTAL CRAY VALLEY S.A. The conjugated diene polymer and the hydride thereof may be modified by introducing functional groups with maleic anhydride or another compound. Among the conjugated diene-based polymers, polymers containing no vinylene groups or less vinylene groups in the main chain are preferred. This is because the vinylene group in the main chain tends to remain in the cured product even after curing, and the vinylene group reacts with oxygen in the air to generate a polar group containing oxygen, so that the dielectric constant and dielectric loss tangent values tend to increase. In contrast, there exists a tendency that after a high-temperature durability test of a cured product (for example, at 125°C in air), the vinyl group allows the dielectric constant and dielectric loss tangent values to be maintained low. From this point of view, a 1,4-polybutadiene copolymer is unsuitable as conjugated diene polymer, and a 1,2-polybutadiene polymer or copolymer containing a 1,2-polybutadiene structure may be preferably used. Further, from this point of view, various hydrogenated polymers in which the vinylene groups are hydrogenated to greatly reduce the content may be preferably used. Examples of the hydrogenated polymers of conjugated diene-based polymers include hydrogenated SBR, SEBS, SEPS, SEEPS and SEEBS, and hydrogenated polymers of conjugated diene polymers having methyl-substituted styrene are preferred. In the case where one or more resins selected from the hydrocarbon-based elastomers are in a liquid state (approximately 300000 mPa·s or less) at room temperature (25°C) in particular, the amount used thereof is preferably 150 parts by mass or less, more preferably 1 to 30 parts by mass, and most preferably 1 to 20 parts by mass relative to 100 parts by mass of the copolymer, from the viewpoint of handleability and moldability of the composition of the present invention in an uncured state (handleability as thermoplastic resin).

### <Polyphenylene ether>

As the polyphenylene ether (also referred to as "polyphenylene ether-based resin"), a commercially available known polyphenylene ether may be used. The number average molecular weight of the polyphenylene ether may be freely selected, and is preferably 10000 or less, most preferably 5000 or less, in consideration of molding processability of the composition. The number average molecular weight may preferably be 500 or more.

In the case of addition for curing the composition of the present invention, it is preferable that the terminal of the molecule be modified with a functional group. Further, in the case of addition for curing the composition of the present invention, it is preferable that one molecule have a plurality of functional groups. For example, a modified polyphenylene ether is preferred. Examples of the functional group include a radically polymerizable functional group and a functional group such as epoxy group, and a radically polymerizable functional group is preferred. As the radically polymerizable functional group, a vinyl group is preferred. As the vinyl group, one or more selected from the group consisting of an allyl group, a (meth)acryloyl group and an aromatic vinyl group are preferred, one or more selected from the group consisting of a (meth)acryloyl group and an aromatic vinyl group are more preferred, and an aromatic vinyl group is most preferred. In other words, in the composition of the present invention, a bifunctional polyphenylene ether with both ends of the molecular chain modified with a radically polymerizable functional group is particularly preferred. Examples of the preferred polyphenylene ether include Noryl (trademark) SA9000 manufactured by SABIC (modified polyphenylene ether having methacryloyl groups at both ends, number average molecular weight: 2200) and a bifunctional polyphenylene ether oligomer manufactured by MITSUBISHI GAS CHEMICAL COMPANY, INC. (OPE-2St, modified polyphenylene ether having a vinylbenzyl group at both ends, number average molecular weight: 1200). An allylated PPE manufactured by Asahi Kasei Corporation and an aromatic polyether (ELPAC HC-F series) manufactured by JSR Corporation may also be used. Among these, a bifunctional polyphenylene ether oligomer (OPE-2St) manufactured by MITSUBISHI GAS CHEMICAL COMPANY, INC. may be preferably used. The amount of polyphenylene ether used in the composition of the present invention is preferably 1 to 200 parts by mass, more preferably 1 to 100 parts by mass, relative to 100 parts by mass of the copolymer.

### <Aromatic polyene-based resin>

The aromatic polyene-based resin includes divinylbenzene-based reactive multibranched copolymers (PDV) manufactured by NIPPON STEEL Chemical & Material CO., LTD. Such a PDV is described, for example, in literature "Synthesis of polyfunctional aromatic vinyl copolymer and development of new lPN-type low dielectric loss material using same" (Masao Kawabe et al., Journal of Electronics Packaging Society, pp. 125, Vol. 12, No. 2 (2009)). The amount of the aromatic polyene-based resin used in the composition of the present invention is preferably 1 to 200 parts by mass, more preferably 1 to 100 parts by mass, and most preferably 1 to 50 parts by mass, relative to 100 parts by mass of the copolymer. Use of the aromatic polyene-based resin in an amount within the ranges is preferable for preventing deterioration in adhesion to other members and deterioration in toughness.

### <Monomer>

The content of the monomer that the composition of the present invention may contain is preferably 100 parts by mass or less relative to 100 parts by mass of the copolymer. The resin composition may contain substantially no monomer. The monomer is a monomer that may be polymerized by any of radical polymerization, cationic polymerization, and anionic polymerization, and preferably a monomer that may be radically polymerized. The molecular weight thereof is preferably 5000 or less, preferably less than 5000, more preferably 1000 or less, more preferably less than 1000, still more preferably 500 or less, still more preferably less than 500. The monomer contains the "aromatic vinyl compound" and "aromatic polyene", and may also appropriately contain an "aromatic vinylene compound". The aromatic vinylene compound is a compound having both a single aromatic ring or a plurality of condensed aromatic rings having 9 to 30 carbon atoms and a vinylene group. Examples of such aromatic vinylene compounds include indenes, beta-substituted styrenes and acenaphthylenes. Examples of the indenes include indene, various alkyl-substituted indenes and phenyl-substituted indenes. Examples of the beta-substituted styrenes include β-alkyl-substituted styrenes such as β-methylstyrene, or phenyl-substituted styrenes. Examples of the acenaphthylenes include acenaphthylene, various alkyl-substituted acenaphthylenes, and various phenyl-substituted acenaphthylenes. As the aromatic vinylenes, the compounds exemplified above may be used alone, or two or more thereof may be used in combination. The aromatic vinylenes preferably have a boiling point of 175°C or more at normal pressure. Acenaphthylene is most preferred from the viewpoint of industrial availability and radical polymerizability. Preferably, the monomer may be selected from "aromatic vinyl compounds", "aromatic polyenes", and "aromatic vinylenes". The "aromatic vinyl compound" and "aromatic polyene" described above are preferred. More preferably, the monomer may be the following "polar monomer".

### <Polar monomer>

The content of the polar monomer that the composition of the present invention may contain is preferably 100 parts by mass or less relative to 100 parts by mass of the copolymer. The resin composition may contain substantially no polar monomers. The polar monomer is a monomer having one or more atoms selected from oxygen, nitrogen, phosphorus, and sulfur in the molecule, and the polar monomer that can be suitably used has a molecular weight of preferably less than 5000, more preferably less than 1000, and still more preferably less than 500. The polar monomer that may be suitably used in the resin composition of the present invention is preferably a polar monomer that may be polymerized by a radical polymerization initiator. Examples of the polar monomer include various maleimides, bismaleimides, maleic anhydride, triallyl isocyanurate, glycidyl (meth)acrylate, tri(meth)acrylic isocyanurate, and trimethylolpropane tri(meth)acrylate. The maleimides and bismaleimides that may be used in the present invention are described in, for example, International Publication No. WO 2016/114287 and Japanese Patent Laid-Open No. 2008-291227, and may be purchased from Daiwa Kasei Industry Co., Ltd., Nippon Kayaku Co., Ltd., or Designer Molecule Inc. A bismaleimide-based resin "SLK" manufactured by Shin-Etsu Chemical Co., Ltd. may also be used. The maleimide group-containing compounds are preferably bismaleimides from the viewpoints of solubility in organic solvents, high-frequency characteristics, high adhesion to conductors, and moldability of prepreg. The maleimide group-containing compounds may be used as polyamino bismaleimide compounds from the viewpoints of solubility in organic solvents, high frequency characteristics, high adhesion to conductors, and moldability of prepreg. A polyamino bismaleimide compound is obtained, for example, by Michael addition reaction between a compound having two maleimide groups at the terminals and an aromatic diamine compound having two primary amino groups in the molecule. In the case of achieving a high cross-linking efficiency with a small amount of addition, use of a polar monomer having a multifunctional group with two or more functional groups such as bismaleimides, triallyl isocyanurate (TAIC), trimethylolpropane tri(meth)acrylates is preferred. The amount of the polar monomer used in the resin composition of the present invention is preferably 0.1 to 20 parts by mass, more preferably 0.1 to 10 parts by mass, relative to 100 parts by mass of the copolymer. With use in an amount in the range, an effect of having a not too high dielectric constant and a not too high dielectric loss tangent of the resulting cured product may be obtained, so that the dielectric constant may be suppressed to 4.0 or less, preferably 3.0 or less, and the dielectric loss tangent may be suppressed to 0.005 or less, preferably 0.002 or less.

### < Another olefin-aromatic vinyl compound-aromatic polyene copolymer>

The composition of the present invention may contain (d): one or more selected from olefin-aromatic vinyl compound-aromatic polyene copolymers other than the copolymer described above, which satisfy all of the following conditions (i) to (iv):
(i) The copolymer has a number average molecular weight of 500 or more and less than 100000.
(ii) The aromatic vinyl compound monomer is an aromatic vinyl compound having 8 or more and 20 or less carbon atoms, and the content of aromatic vinyl compound monomer units is 70 mass% or less.
(iii) The aromatic polyene is one or more selected from polyenes having 5 or more and 20 or less carbon atoms and having a plurality of vinyl groups and/or vinylene groups in the molecule, and the content of the vinyl groups and/or the vinylene groups derived from aromatic polyene units is 1.5 pieces or more and less than 20 pieces per number average molecular weight.
(iv) The olefin is one or more selected from olefins having 2 or more and 20 or less carbon atoms, and the content of olefin monomer units is 30 mass% or more, wherein a total amount of the olefin monomer units, the aromatic vinyl compound monomer units, and the aromatic polyene monomer units is 100 mass%.

Such olefin-aromatic vinyl compound-aromatic polyene copolymers that satisfy all the other specific conditions are described, for example, in International Publications No. WO 2021/112087, No. WO 2021/112088, and No. WO 2022/014599. Such olefin-aromatic vinyl compound-aromatic polyene copolymers that satisfy all the other specific conditions are soft and exhibit a low dielectric constant and a low dielectric loss tangent, so that they may be combined with the aromatic vinyl compound-aromatic polyene copolymer of the present invention to form a composition, which may preferably provide a cured product having a low dielectric constant and a low dielectric loss tangent that covers a wide range of physical properties.

Specifically, for example, a composition containing the other olefin-aromatic vinyl compound-aromatic polyene copolymer in an amount of preferably 1 to 200 parts by mass, particularly preferably 50 to 200 parts by mass relative to 100 parts by mass of the aromatic vinyl compound-aromatic polyene copolymer of the present invention may further exhibit an effect of reducing tackiness (self-adhesiveness) in the uncured state. In the present specification, the term uncured includes the concept of semi-cured. In the present specification, an uncured composition itself exhibits thermoplasticity (i.e., a property that allows molding such as sheeting to be performed under molding conditions not causing curing), and is in a state to be cured by applying appropriate curing conditions (heating, pressure, etc.) after molding. Therefore, it is particularly useful as an interlayer insulating sheet or bonding sheet which is required to be stored and transported in an uncured state. The glass transition temperature of the aromatic vinyl compound-aromatic polyene copolymer of the present invention may be confirmed to be in the range of 30°C to 100°C by a known measuring method. The other olefin-aromatic vinyl compound-aromatic polyene copolymer described above may be confirmed to have a glass transition temperature in the range of -100 to 30°C by a similar measurement method. Therefore, the composition as described above has a plurality of glass transition temperatures both in the range of 30°C to 100°C and in the range of -100 to 30°C in an uncured state. Examples of known measurement methods include differential scanning calorimetry (DSC) and dynamic viscoelasticity measurement (DMA).

Further, the composition of the present invention may contain one or more selected from the following (e) to (g):
(e) Filler
(f) Fire retardant
(g) Surface modifier

### <Filler>

A known inorganic or organic filler may be added on an as needed basis. The filler is added for controlling the coefficient of thermal expansion, controlling the thermal conductivity, or reducing cost, and the amount used may be freely selected depending on the purpose. In particular, in the case of adding an inorganic filler, use of a known surface modifier such as silane coupling agent is preferred. In particular, for the purpose of making a resin composition excellent in low dielectric constant and low dielectric loss, which is one of the objects of the present invention, the inorganic filler is preferably one or more of boron nitride (BN) and silica, more preferably silica. As the silica, fused silica is preferred. From the viewpoint of low dielectric properties, a filler in an amount of preferably 500 parts by mass or less, or less than 500 parts by mass, more preferably 400 parts by mass or less, or less than 400 parts by mass, is used relative to 100 parts by mass of the copolymer. Furthermore, in order to improve low dielectric properties (low dielectric constant, low dielectric loss tangent), a hollow filler or a filler having a shape with many voids may be added.

Alternatively, an organic filler such as high-molecular-weight polyethylene or ultra-high-molecular-weight polyethylene may be used instead of the inorganic filler. From the viewpoint of heat resistance, it is preferable that the organic filler itself be crosslinked, and blended in the form of fine particles or powder. The organic fillers may suppress increases in dielectric constant and dielectric loss tangent.

On the other hand, a high dielectric insulator filler having a dielectric constant of preferably 4 to 10000, more preferably 5 to 10000 at 1 GHz is mixed and dispersed into the resin composition of the present invention, so that an insulating cured product having an insulating layer with a high dielectric constant of preferably 4 to 20 may be produced while an increase in dielectric loss tangent (dielectric loss) is suppressed. With an increase in the dielectric constant of a film made of the insulating cured product, the circuit size may be reduced and the capacity of a capacitor may be increased, which contributes to size reduction of high-frequency electric parts. An insulating layer with a high dielectric constant and a low dielectric loss tangent is suitable for use in capacitors, inductors for resonant circuits, filters, and antennas. Examples of the high dielectric constant insulator filler used in the present invention include inorganic fillers and metal particles subjected to insulation treatment. Specific examples thereof include known high dielectric constant inorganic fillers such as barium titanate and strontium titanate, and other examples are specifically described in, for example, Japanese Patent Laid-Open No. 2004-087639.

### <Flame retardant>

Flame retardants may be used in the composition of the present invention. Preferred flame retardants are known organophosphorus-based flame retardants such as phosphates or condensates thereof, known bromine-based flame retardants, and red phosphorus from the viewpoint of maintaining a low dielectric constant and a low dielectric loss tangent. Among phosphates, compounds having a plurality of xylenyl groups in the molecule are particularly preferred from the viewpoint of flame retardancy and low dielectric loss tangent.

In addition to flame retardants, antimony-based compounds such as antimony trioxide, antimony tetroxide, antimony pentoxide, sodium antimonate, or nitrogen-containing compounds such as melamine, triallyl-1 ,3,5-triazine-2,3,4-(1H,3H,5H)-trione and 2,4,6-triaryloxy-1 ,3,5-triazine may be added as flame retardant aids. The total amount of the flame retardants and flame retardant aids is usually preferably 1 to 100 parts by mass relative to 100 parts by mass of the resin composition. Further, 30 to 200 parts by mass of a polyphenylene ether (PPE)-based resin having a low dielectric constant and excellent flame retardancy may be used relative to 100 parts by mass of the flame retardant.

### <Surface modifier>

The composition of the present invention contains a surface modifying agent for the purpose of improving adhesion to a copper foil for wiring. In particular, the purpose is to increase the adhesive strength (peel strength) to the smooth surface of a copper foil. The amount of the surface modifier used is in the range of 0.001 to 10 parts by mass, more preferably 0.01 to 5 parts by mass, most preferably 0.01 to 1 part by mass, relative to 100 parts by mass of the olefin-aromatic vinyl compound-aromatic polyene copolymer. With an amount of the surface modifier used of less than 10 parts by mass, the dielectric constant and dielectric loss tangent of the cured product obtained from the composition decrease. A known surface modifier may be used in the present invention. Examples of such a surface modifier include a silane-based surface modifier (also known as silane coupling agent), a titanate-based surface modifier, and an isocyanate-based surface modifier. Preferably, a silane-based surface modifier is used. One or a plurality of these surface modifiers may be used. Such silane-based surface modifiers are available from Shin-Etsu Chemical Co., Ltd., Dow Corning Corporation, and Evonik Industries AG.

The composition of the present invention may further contain (h) solvent. Among the compositions of the present invention, those that are particularly in a liquid state due to containing a solvent are referred to as varnishes.

### <Solvent>

A suitable solvent (solvent medium) may be added to the composition of the present invention, on an as needed basis. The amount thereof used is not particularly limited. The solvent is used to adjust the viscosity and fluidity of the composition. In particular, in the case where the resin composition of the present invention is in a varnish state, a solvent is preferably used. Since a solvent having a high boiling point under atmospheric pressure, that is, a solvent having low volatility, may cause an even thickness of the applied film, a solvent having a boiling point above a certain level is preferably used. A preferable boiling point is approximately 75°C or more, more preferably 130°C or more and 300°C or less under atmospheric pressure. As the solvent, for example, cyclohexane, cyclohexanone, methyl ethyl ketone (MEK) toluene, ethylbenzene, xylene, mesitylene, tetralin, acetone, limonene, a mixed alkane, or a mixed aromatic-based solvent is used. The amount of solvent used in the composition of the present invention may be freely selected, and is preferably 5 to 500 parts by mass, more preferably 10 to 300 parts by mass, and most preferably 50 to 150 parts by mass, relative to 100 parts by mass of the copolymer.

In the case of using a raw material with low solubility in toluene or other aromatic solvents as constituent of the composition of the present invention, for example, in the case of using a specific bismaleimide, methyl ethyl ketone (MEK) may be used as the solvent. That case is preferable, because the aromatic vinyl compound-aromatic polyene copolymer of the present invention has high solubility in methyl ethyl ketone.

The composition and varnish of the present invention may contain additives that are usually used in a resin, such as antioxidants, weathering agents, light stabilizers, lubricants, compatibilizers, and antistatic materials, in the range not impairing the effect and purpose of the present invention. The composition and varnish of the present invention may be obtained by mixing, dissolving, or melting the various additives described above, and any known methods for mixing, dissolving, and melting may be employed.

The composition of the present invention may be mixed by a known kneading method such as a twin-screw kneader, various rolls, and various kneaders. In the case where the composition is a varnish, mixing may be performed by adding to the varnish and stirring.

### <Varnish>

The varnish of the present invention may be in a viscous state at room temperature or by heating to 100°C or less, through adjustment of the composition and molecular weight of the copolymer to be used, addition of a certain amount or more of a liquid monomer or solvent within the scope of the present invention, or addition of a liquid flame retardant, and has a viscosity at room temperature of, for example, several hundred thousand mPa·s or less, preferably 10000 mPa·s or less or 2000 mPa·s or less, more preferably 1000 mPa·s or less, and most preferably 500 mPa·s or less. Specifically, another material is coated, impregnated, or filled with the varnish, or the varnish is dripped onto another material by an appropriate method and the solvent is removed to obtain a molded product. Furthermore, a desired cured product may be obtained by curing with heat or light. Such properties allow an insulating coating film or an insulating layer to be formed through various transfer molding (press fitting), coating on or between a substrate and a semiconductor device material, or extrusion lamination or spin coating to form a sheet or film, and then through curing. In addition, the polymerization liquid obtained in copolymerization of the aromatic vinyl compound-aromatic polyene copolymer of the present invention (generally containing a solvent for use in polymerization such as toluene, ethylbenzene, cyclohexane and methylcyclohexane, a residual monomer such as styrene and divinylbenzene, a residual monomer such as an olefin monomer, a catalyst, and a cocatalyst component, in addition to the present copolymer) may be used as a varnish as it is. Alternatively, the varnish may also be obtained by distilling off a part or all of the solvent and residual monomers from the polymer solution under reduced pressure and diluting with the solvent on an as needed basis. That is, the varnish of the present invention may contain residual monomers during polymerization and solvents used in polymerization.

### < Molded product>

The shape of the molded product obtained from the compositions of the present invention is optional. The compositions may exhibit thermoplastic properties. Accordingly, the composition may be molded into a shape such as sheet, tube, strip and pellet in a substantially uncured state by a known molding method of thermoplastic resins, such as extrusion molding, injection molding, press molding and inflation molding, under conditions not causing cross-linking. In an embodiment, an effect of reducing self-adhesiveness (tackiness) of the molding may be obtained. The molded product may be then cross-linked (cured). For example, the composition in a varnish state may be applied to a base material and then the solvent is removed by heating, decompressing, air drying, etc., so that a molded product in a sheet or film form may be obtained in general. By these methods, an uncured sheet or film may be obtained. Alternatively, a porous base material, woven fabric or non-woven fabric may be impregnated with the varnish of the present invention, and the solvent is removed, so that a composite may be obtained. Also, for example, a hemispherical shape may be formed by dropping the varnish onto a base material and removing the solvent.

The sheet may be in an uncured (semi-cured) state to an extent that the sheet shape may be maintained, or may be in a completely cured state. The degree of curing of the composition may be quantitatively measured by a known dynamic viscoelasticity measurement method (DMA, Dynamic Mechanical Analysis).

### <Curing process>

Curing of the composition or varnish of the present invention and the molded product obtained therefrom may be performed by a known method with reference to the curing conditions (temperature, time, pressure) of the raw materials and curing agent contained. In the case of using a peroxide as curing agent, curing conditions may be determined with reference to the half-life temperature and the like disclosed for each peroxide.

### <Cured product obtained from composition, and cured product of molded product>

The cured product obtained from the composition of the present invention is sufficiently cured, having a gel content of preferably 90 mass% or more, more preferably more than 90 mass%, as measured according to ASTM. The dielectric constant of the cured product is preferably 3.0 or less and 2.0 or more, more preferably 2.8 or less and 2.0 or more, and most preferably 2.5 or less and 2.0 or more, in a measurement range of 10 to 50 GHz, particularly preferably at 10 GHz. The dielectric loss tangent is preferably 0.003 or less and 0.0005 or more, more preferably 0.002 or less and 0.0005 or more. The resulting cured product having a volume resistivity of preferably 1×10¹⁵ Ω·cm or more and a water absorption rate of preferably 0.1 mass% or less, more preferably less than 0.1 mass%, is preferred as an electrical insulating material. These values are particularly preferable for an electrical insulating material for high frequencies of, for example, 3 GHz or more.

The cured product obtained from the copolymer or composition of the present invention is particularly suitable as an electrical insulating material for high-frequency signals, and may be suitably used for CCL substrates, FCCL substrates, interlayer insulating materials (bonding sheets), or coverlays. The present invention also relates to CCL substrates, FCCL substrates, interlayer insulating materials (bonding sheets), or coverlays made of the copolymer or composition containing the same.

### EXAMPLES

The present invention will be described below with reference to Examples, though the present invention is not limited to the following Examples.

The copolymers obtained in Synthesis Examples and Comparative Synthesis Examples were analyzed by the following methods.

The content of each of the vinyl group units derived from ethylene, styrene, and divinylbenzene in the copolymer was determined from peak area intensity attributed to each in ¹H-NMR. The sample was dissolved in heavy 1,1,2,2-tetrachloroethane and measurement was performed at 80 to 130°C.

As for the molecular weight, GPC (gel permeation chromatography) was used to determine the number average molecular weight (Mn) in terms of standard polystyrene. Measurement was performed under the following conditions.

Column: Two TSK-GEL Multipore HXL-M having a diameter of 7.8 mm and a length of 300 mm (manufactured by Tosoh Corporation) were connected in series for use.
Column temperature: 40°C
Solvent: THF
Liquid sending rate: 1.0 ml/min
Detector: RI detector

### <Gel fraction>

The gel fraction was determined as insoluble fraction in boiling toluene according to ASTM D2765-84.

### <Water absorption rate>

According to ASTM D570-98, the water absorption rate was measured after immersion in pure water at 23°C for 24 hours.

### <Dielectric constant and dielectric loss (dielectric loss tangent)>

The dielectric constant and dielectric loss tangent of a sample having sizes of 1 mm by 1.5 mm by 80 mm cut from a sheet were measured at 23°C and 10 GHz by the cavity resonator perturbation method (network analyzer 8722ES manufactured by Agilent Technologies, and cavity resonator manufactured by Kanto Electronics Application & Development Inc.).

### <Tensile elastic modulus>

In accordance with JIS K-6251: 2017, the cured product of the composition according to each Example and Comparative Example was molded into a film sheet with a thickness of about 1 mm, cut into a No. 2 dumbbell No. 1/2 type test piece shape, and subjected to measurement using Tensilon UCT-1T manufactured by Orientec Corporation at 25°C and a tensile speed of 500 mm/min to determine the tensile modulus.

### <Storage elastic modulus>

Using a dynamic viscoelasticity measuring device (RSA-G2, manufactured by TA Instruments, formerly known as Rheometrics), measurement was performed while raising the temperature from room temperature at a frequency of 1 Hz, so that the storage modulus at 280°C was measured. A sample for measurement (3 mm×40 mm) was cut out from a film having a thickness of about 0.1 to 0.3 mm and measured to determine the storage modulus. The main measurement parameters involved in the measurements are as follows:
Measurement frequency: 1 Hz
Heating rate: 3°C/min
Sample measurement length: 10 mm
Distortion: 0.1%

### <CTE (coefficient of linear thermal expansion)>

CTE was measured using a thermomechanical analyzer (TMA: thermomechanical analyzer, manufactured by BRUKER AXS, currently known as Netzsch Japan K.K.) with reference to JPCA Standard "Standard on Electronic Circuit Boards, 3^{rd} Edition" Section 16, Material Standards for Printed Wiring Boards, under conditions including a width of 3 to 5 mm, a thickness of 0.5 to 0.6 mm, a distance between chucks of 15 to 20 mm, a tensile load of 10 g, and a heating rate of 10°C/min, so that an average value between -30°C and 150°C was determined.

### <Production of copolymer>

With reference to the production methods described in Japanese Patent Laid-Open No. 2009-161743 and Japanese Patent Laid-Open No. 2010-280771, Rac-dimethylmethylene bis(4,5-benzo-1-indenyl)zirconium dichloride (structure: refer to the following formula (1)) as catalyst, modified methyl aluminoxane (manufactured by Tosoh Finechem Corporation, MMAO-3A toluene solution) as cocatalyst, cyclohexane as solvent, styrene, divinylbenzene, and ethylene as raw materials and 1-hexene on an as needed basis were used. As divinylbenzene, trade name "Divinylbenzene (96%)" manufactured by NIPPON STEEL Chemical & Material CO., LTD. (a mixture of meta- and para-isomers containing 96 mass% of divinylbenzene) was used. Polymerization was performed in a polymerization vessel having a volume of 10 L, equipped with a stirrer and a jacket for heating and cooling.

### Synthesis Example P-1

A polymerization vessel was charged with 870 g of toluene, 4530 g of styrene, and 130 g of divinylbenzene (meta-para mixture, manufactured by NIPPON STEEL Chemical & Materials CO., LTD., purity: 80%), and nitrogen with a dew point of -50°C or less was bubbled into the liquid at a liquid temperature of 40°C to sufficiently substitute the inside with nitrogen. Further, the gas was switched to ethylene, pressurized to about 0.5 MPa and released to normal pressure, which was repeated 5 times to replace the inside with ethylene gas. The internal liquid temperature was stabilized at 80°C, and 50 mmol of modified methyl aluminoxane (manufactured by Tosoh Finechem Corporation, MMAO-3A toluene solution) was added thereto as an aluminum content. Ethylene gas was introduced therein and stabilized at a pressure of 0.02 MPa (0.2 atm in gauge). Polymerization was initiated by adding 30 ml of a toluene solution containing 50 µmol of Rac-dimethylmethylene bis(4,5-benzo-1-indenyl)zirconium dichloride (structure: refer to the following formula (1)) and 1 mmol of tri-isobutyl aluminum thereto from a catalyst tank. During polymerization, the internal temperature was maintained at 80°C, and ethylene was supplied so as to maintain the internal pressure at 0.02 MPa. After about 3 hours, when a predetermined amount of ethylene was consumed, the ethylene gas was released, and a small amount of isopropanol was added to the polymerization solution to terminate the polymerization. Then, a sufficiently large amount of methanol was added to the resulting polymerization liquid to recover the copolymer. The copolymer was air-dried and further vacuum-dried at 30°C for one day to obtain about 930 g of a copolymer P-1. In Table 1, the composition and number average molecular weight of the copolymer are shown.

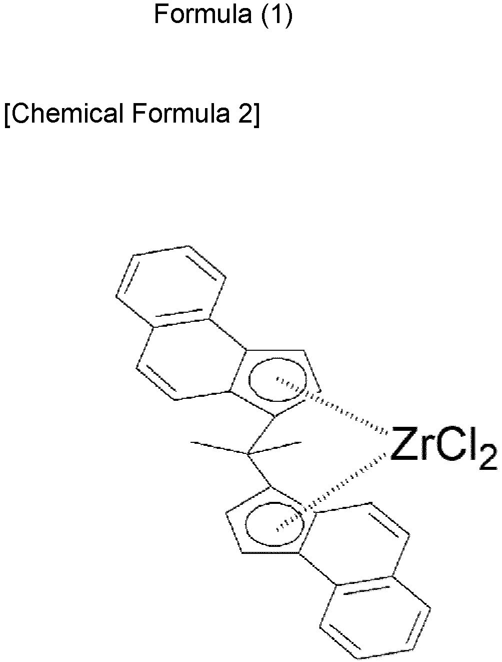

### Synthesis Example P-2

Polymerization was performed in the same manner as in P-1, except that the internal pressure of the polymerization vessel was maintained at 0.00 MPa (0.0 atm in gauge) and the internal temperature during polymerization was maintained at 100°C. About 600 g of a copolymer P-2 was obtained. In Table 1, the composition and number average molecular weight of the copolymer are shown.

### Synthesis Example P-3

With reference to the production methods described in Japanese Patent Laid-Open No. 9-309925, Japanese Patent Laid-Open No. 2009-161743, and Japanese Patent Laid-Open No. 2010-280771, using Rac-dimethylmethylene bis(4,5-benzo-1-indenyl)zirconium dichloride (structure: refer to the following formula (1)) as catalyst, polymerization was performed in the same manner. In Table 1, the composition and number average molecular weight of a copolymer P-3 are shown.

### Synthesis Example P-4

With reference to the production methods described in Japanese Patent Laid-Open No. 9-40709, Japanese Patent Laid-Open No. 9-309925, Japanese Patent Laid-Open No. 2009-161743 and Japanese Patent Laid-Open No. 2010-280771, using dimethylmethylene biscyclopentadienyl zirconium dichloride (structure: refer to the following formula (2)) as catalyst, polymerization was performed in the same manner. In Table 1, the composition and number average molecular weight of a copolymer P-4 are shown.

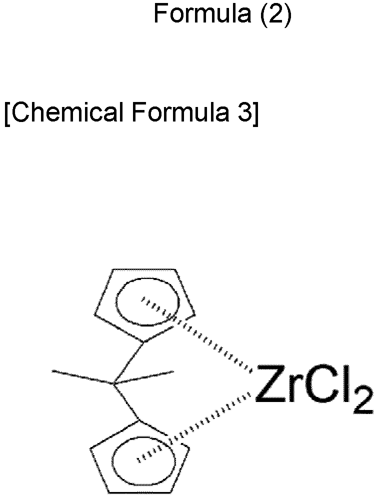

The solubility of the resulting copolymers P-1 to P-4 in methyl ethyl ketone was examined as follows. At 25°C, 3 g of fine particles of the copolymer were accurately weighed in a container equipped with a stirrer placed on an electronic balance, 3 g of methyl ethyl ketone was added thereto, and the mixture was stirred for 15 minutes. In the case of undissolved state, the same operation was performed by adding every 3-g increment of methyl ethyl ketone, and the mass of methyl ethyl ketone until complete dissolution was measured to use the solubility. In Table 1, a solubility at 25°C in terms of 100 g of methyl ethyl ketone of 40 g or more was evaluated as excellent, 20 g or more and less than 40 g was evaluated as fair, and less than 20 g was evaluated as NG.

### Other raw materials are as follows.

A bifunctional polyphenylene ether oligomer (OPE-2St, modified polyphenylene ether having vinyl benzyl groups at both terminals, number average molecular weight: 1200) in a powder form for use was obtained by further diluting a toluene solution product manufactured by MITSUBISHI GAS CHEMICAL COMPANY, INC. with toluene, adding a large amount of methanol to perform methanol precipitation, air-drying, and drying under reduced pressure.

1 ,2-Polybutadiene (PBd): liquid polybutadiene, manufactured by NIPPON SODA CO., LTD. "B-3000", number average molecular weight: 3200, viscosity 210 Poise (45°C).

SEBS: Hydrogenated styrene-based thermoplastic elastomer, "Tuftec H1041" manufactured by Asahi Kasei Corporation, number average molecular weight: 58000.

### Perbutyl P (α,α'-di(t-butyl peroxy)diisopropylbenzene) manufactured by NOF CORPORATION was used as a curing agent.

**[Table 1]**

| | Ethylene content | 1-Hexene content | Styrene content | Divinylbenzene vinyl group | Number average molecular weight | Solubility in MEK |
|---|---|---|---|---|---|---|
| Copolymerized oligomer or polymer | mass% | mass% | mass% | (pieces/number average molecular weight) | Mn | |
| P-1 | 15 | 0 | 81 | 12.5 | 38300 | excellent |
| P-2 | 9 | 0 | 86 | 8.8 | 21000 | excellent |
| P-3 | 46 | 0 | 52 | 6.0 | 33000 | NG |
| P-4 | 44 | 0 | 46 | 3.8 | 4800 | NG |

**[Table 2]**

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| P-1 | 100 | - | 100 | 100 | 100 | 100 | - | - | - |
| P-2 | - | 100 | - | - | - | - | - | - | - |
| P-3 | - | - | - | - | - | 100 | 100 | - | 100 |
| P-4 | - | - | 100 | - | - | - | - | 100 | 100 |
| 1,2-Polybutadiene | - | - | - | 50 | - | - | - | - | - |
| SEBS | - | - | - | 30 | - | - | - | - | - |
| OPE-2St | - | - | - | - | 100 | - | - | - | - |
| Solvent (toluene) | 200 | 200 | 200 | 200 | 200 | 300 | 200 | 200 | 200 |
| Curing agent Perbutyl P | 1 | 1 | 1 | 1 | 1 | 1 | 1 | 1 | 1 |
| State of varnish | Good | Good | Good | Good | Good | Good | Good | Good | Good |
| Gel content | >90% | >90% | >90% | >90% | >90% | >90% | >90% | >90% | >90% |
| Tensile elastic modulus (25°C)/MPa | 3580 | 3700 | 248 | 350 | 2870 | 210 | 8 | 10 | 10 |
| Storage elastic modulus (280°C)/MPa | 2.1 | 2.3 | 2.4 | 2.7 | 2.5 | 2.0 | 1.3 | 3.2 | 3.3 |
| Dielectric constant (10 GHz) | 2.4 | 2.4 | 2.3 | 2.5 | 2.5 | 2.4 | 2.3 | 2.3 | 2.3 |
| Dielectric loss tangent (10 GHz) | 0.0008 | 0.0009 | 0.0010 | 0.0017 | 0.0015 | 0.0009 | 0.0009 | 0.0010 | 0.0009 |
| CTE(-30~150°C) | 75 | 83 | 114 | 190 | 190 | 160 | Unmeasured | Unmeasured | Unmeasured |
| Water absorption rate (mass%) | <0.1 | <0.1 | <0.1 | <0.1 | <0.1 | <0.1 | <0.1 | <0.1 | <0.1 |

| | | | | | | | | | |
|---|---|---|---|---|---|---|---|---|---|
| 'One part by mass of a curing agent was added to 100 parts by mass of the total of raw materials excluding solvent and the curing agent. | | | | | | | | | |

### Example 1

In a container equipped with a heating and cooling jacket and a stirring blade, P-1 (ethylene-styrene-divinylbenzene copolymer) obtained in Synthesis Example and solvent (toluene) were heated to about 60°C and stirred to dissolve the copolymer. Further, 1 part by mass of a curing agent was added to 100 parts by mass of the resin component excluding the curing agent and solvent, and dissolved and mixed with stirring to obtain a composition in a varnish state. The resulting composition was poured into a Teflon (registered trademark) framework (frame part having a length of 7 cm, a width of 7 cm, and a thickness of 0.2 mm, 0.5 mm, or 1.0 mm) on a PET sheet placed on a glass sheet, air-dried, and then further dried in a vacuum dryer at 60°C for 3 hours or more, so that an uncured sheet was obtained. Further, a Teflon sheet and a Teflon framework were placed under a load of 5 MPa with a press, and the uncured sheet was subjected to heat treatment at 120°C for 30 minutes, 150°C for 30 minutes, and then at 200°C for 120 minutes. The Teflon sheet and the Teflon formwork were then removed, so that a cured sheet was obtained.

### Examples 2 to 6

In the same procedure as in Example 1, a curable resin composition with the formulation in Table 2 (units in the table: parts by mass) was prepared, and in the same procedure, an uncured sheet and a cured sheet of the composition in Examples were obtained.

### Comparative Examples 1 to 3

In the same procedure as in Example 1, a curable resin composition with the formulation in Table 2 (units in the table: parts by mass) was prepared, and in the same procedure, an uncured sheet and a cured sheet of the composition in Comparative Examples were obtained.

The gel fraction, dielectric constant, tensile elastic modulus at 25°C, storage elastic modulus at 280°C, dielectric constant, dielectric loss tangent, coefficient of linear thermal expansion (CTE), water absorption rate of the cured sheets obtained in each Example and Comparative Example are shown in Table 2.

In Table 2, the results of visually checking whether the state of the varnish was good (Good) or bad (NG) are also shown.

By comparing the cured products of the P-1 and P-2 resins alone (Examples 1 and 2) and the cured products of the P-3 and P-4 resins alone (Comparative Examples 1 and 2), it can be seen that any of the cured products of the copolymers of the present invention exhibits a high tensile elastic modulus (25°C, that is, room temperature) that satisfies the conditions of the present invention. Further, the cured product of the composition of OPE-2St and P-1 that give a hard cured product alone (Example 5), the cured product of the composition of P-4 and P-1 that give a soft cured product alone (Example 3), and the cured product of the composition of 1 ,2-polybutadiene, SEBS and P-1 (Example 4) also exhibit high tensile elastic moduli. A cured body of the composition of the present invention can easily exhibit a high tensile elastic modulus of 100 MPa or more at room temperature. Furthermore, it has been confirmed that cured sheets made of the copolymer of the present invention and the composition containing the copolymer of the present invention exhibit a low dielectric constant and a dielectric loss tangent.

As a further test, the tackiness of the uncured sheets obtained in each of Examples and Comparative Examples was evaluated by the sense of touch with a hand. First, the uncured sheets of Examples 1, 2, and 5 were hard and had no tackiness (self-adhesiveness) at all. The uncured sheets of Examples 3, 4, and 6 were able to be handled as free-standing sheets, though having somewhat tackiness. The tackiness of the uncured sheets of Comparative Examples 1, 2, and 3 was higher than that of the uncured sheets of each of the other Examples (especially Examples 3 and 6). In particular, the uncured sheets of Comparative Examples 2 and 3 had remarkably high tackiness, and it was difficult to peel off the sheets of each Comparative Example when brought into close contact with each other. From the results, it has been confirmed that the uncured sheets made of the copolymer of the present invention and the composition containing the copolymer of the present invention exhibit an effect of relatively reducing the tackiness.

## Claims

1. An aromatic vinyl compound-aromatic polyene copolymer that satisfies all of the following conditions (1) to (4):
(1) The copolymer has a number average molecular weight of 500 or more and less than 100000;
(2) The aromatic vinyl compound monomer is an aromatic vinyl compound having 8 or more and 20 or less carbon atoms, and the content of aromatic vinyl compound monomer units is more than 70 mass%;
(3) The aromatic polyene is one or more selected from polyenes having 5 or more and 20 or less carbon atoms and having a plurality of vinyl groups and/or vinylene groups in the molecule, and the content of the vinyl groups and/or the vinylene groups derived from aromatic polyene units is 2 pieces or more and less than 30 pieces per number average molecular weight; and
(4) One or more selected from olefin monomer units having 2 or more and 20 or less carbon atoms may be included, wherein a total amount of the aromatic vinyl compound monomer units, the aromatic polyene monomer units, and the olefin monomer units, if present, is 100 mass%.

2. The aromatic vinyl compound-aromatic polyene copolymer according to claim 1, wherein the content of the olefin monomer units is 0 mass% or more and less than 30 mass% relative to 100 mass% in total of the aromatic vinyl compound monomer units, the aromatic polyene monomer units, and the olefin monomer units, if present.

3. The aromatic vinyl compound-aromatic polyene copolymer according to claim 2, not comprising an olefin monomer unit.

4. A composition comprising the aromatic vinyl compound-aromatic polyene copolymer according to any one of claims 1 to 3, and one or more selected from the following (a) to (d):
(a) curing agent;
(b) one or more resins selected from hydrocarbon-based elastomers, polyphenylene ether-based resins, and aromatic polyene-based resins;
(c) monomer; and
(d) another olefin-aromatic vinyl compound-aromatic polyene copolymer that satisfies all of the following conditions (i) to (iv):
(i) The copolymer has a number average molecular weight of 500 or more and less than 100000;
(ii) The aromatic vinyl compound monomer is an aromatic vinyl compound having 8 or more and 20 or less carbon atoms, and the content of aromatic vinyl compound monomer units is 70 mass% or less;
(iii) The aromatic polyene is one or more selected from polyenes having a plurality of vinyl groups and/or vinylene groups in the molecule and having 5 or more and 20 or less carbon atoms, and the content of the vinyl groups and/or the vinylene groups derived from aromatic polyene units is 1.5 pieces or more and less than 20 pieces per number average molecular weight; and
(iv) The olefin is one or more selected from olefins having 2 or more and 20 or less carbon atoms, and the content of olefin monomer units is 30 mass% or more, wherein a total amount of the olefin monomer units, the aromatic vinyl compound monomer units, and the aromatic polyene monomer units is 100 mass%.

5. A varnish, comprising:
the copolymer according to any one of claims 1 to 3 or the composition according to claim 4; and
a solvent (h).

6. The varnish according to claim 5, wherein the solvent is MEK (methyl ethyl ketone).

7. A cured product of the aromatic vinyl compound-aromatic polyene copolymer according to any one of claims 1 to 3.

8. A cured product of the composition according to claim 4.

9. A cured product of the varnish according to claim 5 or 6.

10. The cured product according to any one of claims 7 to 9, being an electrical insulating material.

11. A CCL substrate, an FCCL substrate, an interlayer insulating material, a bonding sheet, or a coverlay comprising the cured product according to any one of claims 7 to 9.
